# EUROPEAN PATENT APPLICATION

(11) **EP 2 949 927 A1**
(43) Date of publication of application: **02.12.2015**
(21) Application number: 14169941.3
(22) Date of filing: 27.05.2014
(51) Int. Cl.: F03D 11/04, F03D 11/00

(54) **Cable Bushing of wind turbine tower**

(71) Applicant: Siemens Aktiengesellschaft, 80333 München (DE)
(72) Inventor: Fetahagic, Ahmed, 7200 Grindsted (DK); Isaac, Wathik Toma, 6710 Esbjerg V (DK); Smedegaard, Thomas, 8230 Abyhoj (DK)

(57) **Abstract**

The invention relates to a cable bushing of a wind turbine tower.

A cable bushing of a wind turbine tower is disclosed. The cable bushing comprises a longitudinal axis, whereby the cable bushing comprises a hole 6 that is arranged mainly parallel to the longitudinal axis. The hole 6 is a through-going hole that leads through the length of the cable bushing. The hole 6 is used by a cable and the cable bushing is used as a cable feed-through, to feed a cable through the wall of a wind turbine tower 1. The cable bushing is a metal bolt 3 that is arranged in a hole of a wind turbine tower 1.

## Description

The invention relates to a cable bushing of a wind turbine tower.

A wind turbine comprises a rotor, a nacelle and a wind turbine tower. The rotor of the wind turbine is connected to the nacelle and the nacelle is arranged on top of the tower.

The wind interacts with the rotor of the wind turbine and rotates the rotor. In addition, the wind induces loads and vibrations into the rotor. The loads and vibrations are transferred from the rotor to the nacelle and into the tower of the wind turbine.

The tower of the wind turbine has to be constructed in a way to withstand the loads and vibrations of the wind acting on the wind turbine. Thus the tower of a wind turbine has to be built quite rigid.

The tower of the wind turbine has to be manufactured and transported to the construction site of the wind turbine. Thus the tower is limited in size and mass.

By making the tower more rigid, more material is used to build the tower. Thus the tower will get heavier, and is thus more difficult to be transported and erected.

Therefore, the use of additional material to build the tower needs to be avoided.

A wind turbine tower comprises several installations at the outside of the tower wall. These can be warning lights for air traffic for example, or antennas.

These installations have to be wired with electric cables. The cables can be installed at the outside of the wall of the tower but the installation of cables along the outside of the tower wall is time consuming and expensive.

It is therefore known to arrange holes that go through the outside wall of the tower to connect the cables to the installations at the outside wall of the tower.

Holes going through the outside wall of the tower weaken the structure of the tower. It is known to weld a bushing at the rim of the hole to strength the tower structure and compensate the loss of strength resulting from the hole in the wall of the tower.

To weld a bushing to the wall of the tower shows the disadvantage that the tower needs to be certified again.

EP 1 544 460 B1 describes a wind turbine with a tower, that comprises at least one obstacle warning light that is emitting light to the outside. The tower comprises a hole and at least one supply line for at least one obstacle warning light is installed from the inside of the tower to the outside. The position and the size of the hole are determined in a way that the stability and function of the tower are not affected. The break-through through the tower wall is arranged to go through the flanges of the tower segments.

This shows the disadvantage that a break-through in a tower wall can only be arranged in the area were two tower segments are connected. The position of a break-through in a tower wall is therefore limited to certain levels of heights of the tower.

The aim of the invention is therefore to provide an improved arrangement for holes in the wind turbine tower.

The object of the invention is achieved by the independent claim 1. Further features of the invention are disclosed in the dependant claims.

A cable bushing of a wind turbine tower is disclosed. The cable bushing comprises a longitudinal axis whereby the cable bushing comprises a hole that is arranged mainly parallel to the longitudinal axis.

The hole is a through-going hole that leads through the length of the cable bushing. The hole is used by a cable and the cable bushing is used as a cable feed-through to feed a cable through the wall of a wind turbine tower. The cable bushing is a metal bolt that is arranged in a hole of a wind turbine tower.

A cable bushing is used to guide a cable through a wall. Therefore, the cable bushing comprises a longitudinal hole that is used by a cable.

A cable bushing in the wall of a wind turbine tower is a metal bolt that is used to tighten elements of a wind turbine tower together. Thus, the metal bolt is used to transfer forces from a first part of a wind turbine tower to a second part of a wind turbine tower.

The metal bolt comprises a longitudinal hole leading mainly along the longitudinal axis of the bolt.

Thus, a cable can be fed through the longitudinal hole and thus the metal bolt can be used as a cable bushing to guide the cable from a first side of the wind turbine tower wall to a second side of the wind turbine tower wall.

Thus, no additional hole in the wall of the wind turbine tower is needed to feed a cable through the tower wall. Thus, the strength of the wind turbine tower is not diminished by an additional hole for the cable. Thus, a hole in the wind turbine tower that is already there and is used for the metal bolt to tighten the tower elements together is used to feed the cable through the tower wall.

Thus, a hole in the wind turbine tower is used by a metal bolt to tighten the connection and a metal bolt is used by a cable as a cable bushing.

The metal bolt is used to connect two parts of a wind turbine tower.

Wind turbine towers of nowadays wind turbines comprise a height of often more than 80 m. Therefore, the wind turbine towers are manufactured and erected in pieces.

Typically wind turbine towers are set up in segments that are ring-shaped and are connected to form the wind turbine tower.

The segments of the wind turbine tower can also comprise sectors but are combined to form a segment of a wind turbine tower.

Segments and/or sectors of a wind turbine tower wall are connected together by metal bolts. The metal bolts are prepared to tighten the metal pieces of the tower together and are prepared to transfer forces from a first part of a wind turbine tower to a second part of a wind turbine tower.

Thus, the metal bolt is used to connect two parts of a wind turbine tower together. Thus, the metal bolt is prepared to transfer forces from a first part of the wind turbine tower to a second part of the wind turbine tower.

The cable bushing is prepared to be mounted in a hole in the wind turbine tower in a way that the through-going hole in the cable bushing connects the space inside the tower to the space outside of the tower in a way that a cable that is feed through the cable bushing is leading from the inside of the tower to the outside of the tower.

The wind turbine tower wall comprises a hole. The hole is used by the metal bolt to tighten the connection of two parts of the wind turbine tower wall. The metal bolt in the wind turbine tower wall is used as a cable bushing.

The hole in the wind turbine tower wall connects the inside of the wind turbine tower to the outside of the wind turbine tower. The hole is used by the metal bolt and the metal bolt is used as a cable bushing. Thus, the cable bushing is prepared to lead a cable from the inside of the tower to the outside of the tower.

In many cases, electric installations are needed at the outside of a wind turbine tower. This can be for measurement equipment, or for traffic warning lights, or for antennas for example.

The electric installation at the outside of the tower has to be connected by a cable to the inside of the tower. The cable can be an electric cable for example or a fibre optic cable.

Installing a cable that leads along the outside of the wind turbine tower is quite difficult. A crane is needed to install a cable at a certain height at the outside of the tower.

In addition, the cable has to have a high quality to withstand the metrological conditions at the outside of the wind turbine tower. This can be ice, rain, or salty spray at an offshore wind turbine, for example.

Thus, it is advantages to lead the cable from the outside of the tower to the inside of the tower and install the cable at the inside of the tower. Therefore it is necessary to provide a cable bushing to connect the inside of the tower to the outside of the tower.

An additional hole in the wall of the wind turbine tower reduces the strength of the wind turbine tower. By using a metal bolt of the tower construction as a cable bushing, the strength of the tower is not weakened by an additional hole.

The metal bolt that is prepared to be used as a cable bushing can be installed in every hole where a metal bolt as installed. Thus, every hole in the wind turbine tower that is used by a metal bolt can be used as a cable feed-through.

The cable bushing is a connection element to connect two-parts of the tower whereby the two parts of the tower are metal segments of a tower.

Wind turbine towers are often built of metal. The metal parts are connected together by bolts. A metal bolt of a wind turbine tower can be used as a cable bushing. The metal bolts connect two parts of the tower in a way that forces are transferred from the first part of the tower to the second part of the tower through the metal bolt.

The cable bushing is prepared and arranged in a way that it is capable of transferring forces between the two parts of the tower.

A metal bolt is used to transfer forces between two parts of the tower wall. The metal bolt is prepared in a way that it can be used as a cable bushing. Thus, the cable bushing is prepared and arranged in a way that it is capable of transferring forces between the two parts of the tower.

Thus, no additional hole in the tower or no additional cable bushing is needed to guide a cable through the tower wall. Thus, a normal metal bolt is replaced during installation by a bolt with a cable feed-through hole. Thus, no additional installation time for an additional cable bushing element is needed.

The cable bushing comprises a screw thread at its outer side.

The cable bushing comprises a screw thread at its outer side, thus the metal bolt comprises a screw thread at its outer side.

Thus, the outer side of the metal bolt can be used by a nut to tighten the connection of the metal bolt and thus to tighten the connection between a first part of the tower wall and the second part of the tower wall.

The screw thread is prepared in a way that it is used with a nut to achieve a tight connection with the wind turbine tower.

The metal bolt is prepared to be used as a cable bushing, thus it comprises a through-going hole leading mainly along the longitudinal axis of the bolt.

It shows mainly the strength than a normal metal bolt. Thus, a tight connection between the first part of the wind turbine tower and the second part of the wind turbine tower can be established.

The screw thread at an outer side of the metal bolt can be used by a nut to achieve the tight connection.

The cable bushing comprises a screw head to be used by a tool.

Thus, the metal bolt that is prepared to be used as a cable bushing can be tightened by a wrench.

The cable bushing is a rivet and is prepared to be used to transfer forces from a first part of the wind turbine tower to a second part of the wind turbine tower.

A rivet can be used to establish a tight connection between two parts of a wind turbine tower.

A rivet is even cheaper than a metal bolt that comprises a screw thread. Thus, by using a metal bolt that is a rivet, the installation of a wind turbine tower is even cheaper.

The cable bushing comprises a sealing to seal the through-going hole to avoid that air, water, humidity, and/or insects use the hole to cross through the bolt.

The through-going hole in the cable bushing connects the inside of the tower to the outside of the tower. The hole in the cable bushing allows air, water, humidity, and/or insects to use the hole to cross through the wind turbine tower wall.

The cable bushing comprises a sealing. The sealing closes the hole that is leading through the cable bushing after the cable is installed in the cable bushing. Thus, air, water, humidity, and/or insects for example cannot cross through the hole in the cable bushing.

The cable bushing comprises a strain relief to reduce the stress in the cable.

The wind turbine tower wall is arranged mainly vertical. Thus, the cable leading through the cable bushing to cross from the inside of the tower to the outside of the tower might also be installed along a vertical direction along the tower wall. Thus, the cable might be influenced by gravity.

The cable bushing comprises a strain relief to reduce the stress of the cable. A stress relief is used to tighten the cable in the cable bushing so that gravity cannot pull the cable through the cable bushing. Thus, the stress in the cable is reduced.

The through-going hole in the bolt comprises a non-metal lining at its inner surface to protect the cable from damages due to the contact with the metal surface of the bolt, where the cable is installed in the cable bushing.

During the installation, the cable is moved through the through-going hole in the metal bolt. Thus, the cable is a subject to tear and wear during the movement through the metal bolt. The metal surface of the bolt might damage the cable.

The cable bushing comprises a non-metal lining at the inner side of the through-going hole to protect the cable from damages.

An edge at the end of the through-going hole in a bolt is chamfered or rounded to avoid damage to the cable installed in the cable bushing.

Due to wind and vibrations, a slight movement of the cable in respect to the cable bushing might occur. The cable is leading through the through-going hole in the metal bolt. Thus, the cable is in contact to the edge at the end of the through-going hole of the metal bolt.

Due to vibrations and movement due to wind, the cable might be damaged at the edge at the end of the through-going hole.

The edge at the end of the through-going hole is rounded or chamfered. Thus, the possibility of damages to the cable leading from movement of the cable along the edge of the through-going hole is minimized. Thus, the lifetime of the cable is increased.

The invention is shown in more detail by the help of figures. The figures show a preferred configuration and do not limit the scope of the invention.
- FIG 1: shows a cable bushing of a wind turbine tower,
- FIG 2: shows a second view of the cable bushing,
- FIG 3: shows a cut through the cable bushing,
- FIG 4: shows a third view of the cable bushing.

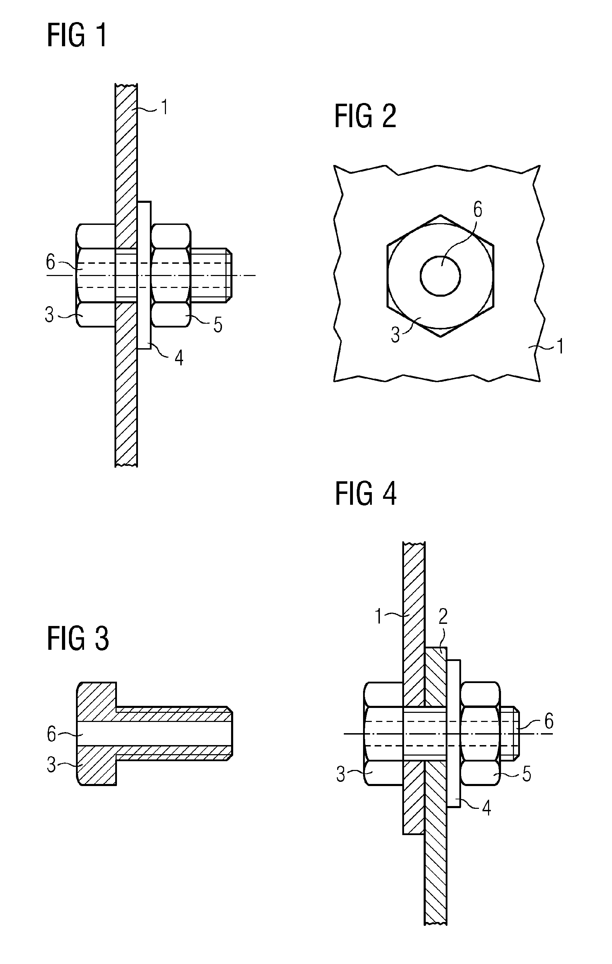

FIG 1 shows a cable bushing of a wind turbine tower.

FIG 1 shows a cable bushing 3 of a wind turbine tower. The cable bushing 3 is used to guide a cable through the wind turbine tower wall 1. The cable bushing 3 is arranged in a hole of the wind turbine tower 1.

The cable bushing 3 comprises a hole 6 that is arranged mainly parallel to the longitudinal axis, thus leads along the longitudinal axis, of the bushing 3. The cable bushing 3 is connected to the wind turbine tower wall 1 by a nut 5 that is screwed on a screw thread at the outer side of the cable bushing 3 and a washer 4.

To tighten the cable bushing 3 at the wind turbine tower wall 1, the cable bushing 3 comprises a screw head at its first end and a screw thread at a second end of the cable bushing 3. A nut 5 is tightened on a screw thread of the cable bushing to tighten the cable bushing 3 in the hole of the wind turbine tower 1.

The cable bushing 3 is a metal bolt that is used to transfer forces from a first part of a wind turbine tower wall 1 to a second part of a wind turbine tower wall.

The through-going hole 6 is used to guide a cable from one side of the wind turbine tower wall 1 to the other side of the wind turbine tower wall 1. The inner surface of the through-going hole 6 is equipped with a non-metal lining that is used to protect the cable from damages due to contact with the metal surface of the bolt.

In addition, the through-going hole 6 can be closed by a sealing material after the cable is installed in a through-going hole 6.

In addition, the cable bushing 3 is equipped with a strain relieve at the through-going hole 6 to reduce the stress in the cable.

FIG 2 shows a second view of the cable bushing.

FIG 2 shows a view vertical to the wind turbine tower wall 1 of the cable bushing 3.

The cable bushing 3 comprises a screw head shaped form so that the cable bushing 3 can be tightened by a screw wrench. A through-going hole 6 leads through the length of the cable bushing 3. The through-going hole 6 is visible in the screw head shaped end part of the cable bushing 3.

FIG 3 shows a cut through the cable bushing.

FIG 3 shows a longitudinal cut through the cable bushing 3.

The cable bushing 3 comprises a through-going hole 6 that leads through the cable bushing 3 mainly along the longitudinal axis of the cable bushing.

At one end of the cable bushing, the cable bushing 3 comprises a screw thread to be used by a nut to tighten the cable bushing 3 at a wind turbine tower wall 1.

FIG 4 shows a third view of the cable bushing.

FIG 4 shows a third view of the cable bushing 3. The cable bushing 3 is arranged in a through-going hole through a first part 1 of a wall of a wind turbine tower and a second part 2 of a wind turbine tower.

The cable bushing 3 is a metal bolt that is used to connect the first part 1 of a wall of a wind turbine tower and the second part 2 of a wall of a wind turbine tower.

The connection between the two parts of the wall of the wind turbine tower is tightened by the metal bolt 3, by a nut 5 and washer 4. The nut 5 is screwed onto the screw thread at the one end of the cable bushing 3.

The connection between the two parts of the wind turbine tower wall is tightened in a way that forces are transferred from the first part of the wall 1 to the second part of the wall 2 by the metal bolt in the hole of the parts of the wind turbine tower wall.

The metal bolt in the wall of the tower is used as a cable bushing 3.

A longitudinal hole 6 is leading through a length of the cable bushing 3. A cable can be guided through the longitudinal hole 6 to cross from one side of the wind turbine tower wall to the other side of the wind turbine tower wall leading through the cable bushing 3.

The hole 6 in the cable bushing 3 is equipped with a protective lining to protect the cable leading through the through-going hole 6 to avoid damage to the cable by the metal surface of the cable bushing 3.

After the installation of the cable in the through-going hole 6 the through-going hole 6 can be closed by a sealing to avoid that air, water, humidity, or insects use the hold cross through the tower wall.

The edges at the end of the through-going hole 6 through the bolt 3 can be chamfered or rounded to avoid damage to the cable.

The illustration in the drawings is in schematic form. It is noted that in different figures, similar or identical elements are provided with the same reference signs.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

It should be noted that the use of "a" or "an" throughout this application does not exclude a plurality, and "comprising" does not exclude other steps or elements. Also elements described in association with different embodiments may be combined. It should also be noted that reference signs in the claims should not be construed as limiting the scope of the claims.

## Claims

1. Cable bushing of a wind turbine tower, whereby the cable bushing comprises a longitudinal axis,
- whereby the cable bushing comprises a hole (6) that is arranged mainly parallel to the longitudinal axis,
- whereby the hole (6) is a through-going hole that leads through the length of the cable bushing,
- whereby the hole (6) is used by a cable and the cable bushing is used as a cable feed-through, to feed a cable through the wall of a wind turbine tower (1), **characterized in that** the cable bushing is a metal bolt (3) that is arranged in a hole of a wind turbine tower (1).

2. Cable bushing according to claim 1, whereby the metal bolt (3) is used to connect two parts of the wind turbine tower (1).

3. Cable bushing according to one of the preceding claims, **characterized in that** the cable bushing is prepared to be mounted in a hole in the wind turbine tower (1) in a way that the through-going hole in the cable bushing connects the space inside the tower to the space outside of the tower (1) in a way that a cable that is fed through the cable bushing is leading from the inside of the tower (1) to the outside of the tower (1).

4. Cable bushing according to one of the preceding claims, **characterized in that** the cable bushing is a connection element to connect two parts of the tower (1, 2), whereby the two parts of the tower (1, 2) are metal segments of the tower.

5. Cable bushing according to one of the preceding claims, **characterized in that** the cable bushing is prepared and arranged in a way that it is capable of transferring forces between the two parts of the tower (1, 2).

6. Cable bushing according to one of the preceding claims, **characterized in that** the cable bushing comprises a screw thread at its outer side.

7. Cable bushing according to claim 6, **characterized in that** the screw thread is prepared in a way that it is used with a nut (5), to achieve a tight connection with the wind turbine tower (1).

8. Cable bushing according to claim 6, **characterized in that** the cable bushing comprises a screw head to be used by a tool.

9. Cable bushing according to one of the claims 1 to 5, **characterized in that** the cable bushing is a rivet and is prepared to be used to transfer forces from a first part of the wind turbine tower (1) to a second part of the wind turbine tower (2).

10. Cable bushing according to one of the preceding claims, **characterized in that** the cable bushing comprises a sealing to seal the through-going hole (6), to avoid that air, water, humidity, and/or insects use the hole to cross through the bolt (3).

11. Cable bushing according to one of the preceding claims, **characterized in that** the cable bushing comprises a strain relief, to reduce the stress in the cable.

12. Cable bushing according to one of the preceding claims, **characterized in that** the through going hole (6) in the bolt (3) comprises a non-metal lining at its inner surface, to protect the cable from damages due to the contact with the metal surface of the bolt (3), when the cable is installed in the cable bushing.

13. Cable bushing according to one of the preceding claims, **characterized in that** an edge at the end of the through-going hole (6) in the bolt (3) is chamfered or rounded to avoid damage to a cable installed in the cable bushing.
